# EUROPÄISCHE PATENTSCHRIFT

(11) **EP 2 940 369 B1**
(45) Veröffentlichungstag und Bekanntmachung des Hinweises auf die Patenterteilung: **19.10.2016**
(21) Anmeldenummer: 14001561.1
(22) Anmeldetag: 03.05.2014
(51) Int. Cl.: F16P 3/14

(54) **Umformeinrichtung und Verfahren zum Betreiben einer Umformeinrichtung**
Reshaping device and method for operating the same
Dispositif de déformation et procédé de fonctionnement d'un dispositif de déformation

(43) Veröffentlichungstag der Anmeldung: 04.11.2015
(73) Patentinhaber: Fiessler Elektronik GmbH & Co. KG, 73734 Esslingen (DE)
(72) Erfinder: Fiessler, Lutz, 73773 Aichwald (DE)
(74) Vertreter: Patentanwälte Magenbauer & Kollegen Partnerschaft mbB

(56) Entgegenhaltungen:
- EP-A1- 2 644 962
- WO-A1-01/92777
- DE-B4- 19 964 492

## Beschreibung

Die Erfindung betrifft eine Umformeinrichtung mit einem Maschinenbett, einem relativbeweglich am Maschinenbett aufgenommenen Werkzeugträger zur Aufnahme eines Werkzeugs, einer mit dem Werkzeugträger gekoppelten Antriebseinrichtung, einer Maschinensteuerung zur Ansteuerung der Antriebseinrichtung und einer Überwachungseinrichtung, die zur Überwachung von Bewegungen des Werkzeugträgers und zur Bereitstellung eines Abschaltsignals an eine der Antriebseinrichtung vorgeschaltete Trenneinrichtung bei Auftreten eines vorgebbaren Überwachungsfalls ausgebildet ist, wobei die Überwachungseinrichtung wenigstens eine Strahlungsquelle und mehrere der Strahlungsquelle gegenüberliegend angeordnete Strahlungsdetektoren umfasst und wobei zumindest ein Teil der von der Strahlungsquelle ausgehenden Strahlenbündel längs einer Arbeitskante des Werkzeugs ausgerichtet ist, sowie mit einem ersten Wegmesssystem und mit einem zweiten Wegmesssystem, die jeweils zur Ausgabe von Positionssignalen für eine Positionsermittlung des Werkzeugträgers gegenüber dem Maschinenbett ausgebildet sind, wobei die Maschinensteuerung für eine Ansteuerung der Antriebseinrichtung mit dem ersten Wegmesssystem verbunden ist. Ferner betrifft die Erfindung ein Verfahren zum Betreiben einer Umformeinrichtung.

Die DE 102004058472 A1 offenbart eine Sicherheitseinrichtung und ein Verfahren zum Bestimmen eines Nachlaufweges bei einer Maschine, bei der ein erstes Maschinenteil eine Arbeitsbewegung gegen ein zweites Maschinenteil ausführt. Dabei umfasst die Maschine zumindest eine erste und eine zweite optische Schranke. Die beiden optischen Schranken bewegen sich in der Arbeitsbewegung mit dem ersten Maschinenteil mit. Dabei eilt die erste optische Schranke dem ersten Maschinenteil in einem ersten Abstand voraus und die zweite optische Schranke ist in einem zweiten Abstand zu der ersten optischen Schranke angeordnet. Ferner ist eine Steuereinheit vorhanden, die dazu ausgebildet ist, die Arbeitsbewegung des ersten Maschinenteils zu stoppen, wenn die erste optische Schranke unterbrochen wird. Zudem sind eine Prüfeinheit und eine Sperreinheit vorgesehen, wobei mit Hilfe der Prüfeinheit geprüft werden kann, ob die zweite optische Schranke nach einem Stopp des ersten Maschinenteils unterbrochen ist. Die Sperreinheit dient zum Sperren der Arbeitsbewegung in Abhängigkeit von dem Prüfergebnis der Prüfeinheit.

In der DE 102004058472 A1 wird auf die DE 202 17 426 U1 verwiesen, die sich mit der Bestimmung des Nachlaufwegs des Werkzeugs bei Abschaltung der Antriebseinrichtung befasst und die zu diesem Zweck die Nutzung einer CNC-Steuerung und des zugehörigen Wegmesssystems offenbart. Als Nachteil dieser Vorgehensweise wird von der DE 102004058472 A1 der erhebliche Aufwand angesehen, um eine gemäß den relevanten Sicherheitsbestimmungen, insbesondere der europäischen Norm EN 954-1, sichere Bestimmung und Überwachung des Nachlaufwegs zu gewährleisten.

Die WO 01/92777 A1 offenbart eine Schutzeinrichtung für Maschinen wie Abkantpressen, bei denen ein erstes Maschinenteil Arbeitsbewegungen gegen ein zweites Maschinenteil ausführt, mit einer zwischen den Maschinenteilen positionierten und am bewegbaren Maschinenteil angebrachten Lichtschrankenanordnung, mit einer bei einer Lichtstrahlunterbrechung die Arbeitsbewegung des bewegbaren Maschinenteils stoppenden Stoppeinrichtung und mit einer die Stoppeinrichtung wenigstens unmittelbar vor einer Lichtstrahlunterbrechung durch das andere Maschinenteil deaktivierenden Deaktivierungseinrichtung, wobei eine Geschwindigkeitsmesseinrichtung für das bewegbare Maschinenteil vorgesehen ist und die Deaktivierungseinrichtung Mittel zur wenigstens teilweisen Deaktivierung der Stoppeinrichtung unterhalb einer vorgebbaren Grenzgeschwindigkeit besitzt und wobei eine Steuervorrichtung für die Arbeitsbewegung des bewegbaren Maschinenteils die Geschwindigkeit unmittelbar vor einer Lichtstrahlunterbrechung durch das andere Maschinenteil unter die Grenzgeschwindigkeit absenkt.

Die EP 2 644 962 A1 offenbart eine Umformeinrichtung, bei der eine Information eines Wegmesssystems, das auf einem niedrigeren Sicherheitsniveau angesiedelt ist, mit Hilfe einer Ortsinformation, die durch gezielte Auswertung geeignet angeordneter Lichtschranken bereitgestellt wird, wobei die Lichtschranken und die zugehörige Auswerteeinrichtung auf einem höheren Sicherheitsniveau angesiedelt sind, bestätigt wird, um einer Maschinensteuerung eine Entscheidung darüber zu ermöglichen, ob eine Umschaltung aus einer schnellen Werkzeugbewegung in eine langsame Werkzeugbewegung und eine Ausblendung von sicherheitsgerichteten Lichtschranken vorgenommen werden kann.

Die Aufgabe der Erfindung besteht darin, eine Umformeinrichtung und ein Verfahren zum Betreiben einer Umformeinrichtung bereitzustellen, bei denen ein sicherheitsgerichtetes Abschalten der Antriebseinrichtung im Überwachungsfall mit geringem technischem Aufwand und ohne Beeinträchtigungen bei der Handhabung von Werkstücken erreicht werden kann.

Diese Aufgabe wird gemäß einem ersten Aspekt der Erfindung für eine Umformeinrichtung der eingangs genannten Art mit den Merkmalen des Anspruchs 1 gelöst. Hierbei ist vorgesehen, dass das erste Wegmesssystem für eine zyklische Bereitstellung von ersten Positionssignalen in einem ersten, schnellen Arbeitstakt ausgebildet ist und dass das zweite Wegmesssystem für eine zyklische Bereitstellung von zweiten Positionssignalen in einem zweiten, langsamen Arbeitstakt ausgebildet ist, wobei die Überwachungseinrichtung derart für einen Vergleich der ersten und zweiten Positionssignale ausgebildet, dass bei Vorliegen eines Positionssignals des ersten Wegmesssystems, das ein Erreichen einer vorgebbaren Position des Werkzeugträgers gegenüber dem Maschinenbett anzeigt, ein Vergleich mit dem zweiten Positionssignal erfolgt und dass eine Deaktivierung wenigstens eines Strahlungsdetektors erfolgt, wenn bei dem Vergleich eine Differenz zwischen dem ersten und dem zweiten Positionssignal unterschritten ist, um eine Schließbewegung des Werkzeugträgers gegenüber dem Maschinenbett fortsetzen zu können.

Das erste Wegmesssystem ist dazu ausgebildet, ein Positionssignal in Echtzeit oder zumindest nahezu in Echtzeit bereitzustellen. Durch Verwendung dieses ersten Positionssignals wird die Maschinensteuerung in die Lage versetzt, die Ansteuerung der Antriebseinrichtung auf Basis der tatsächlichen momentanen Position des Werkzeugträgers oder auf Basis einer allenfalls geringfügig zeitlich verzögerten Information über die Position des Werkzeugträgers vorzunehmen. Beispielhaft wird davon ausgegangen, dass eine maximale Bewegungsgeschwindigkeit des Werkzeugträgers 200 mm/s beträgt und dass das erste Positionssignal mit einem Arbeitstakt von 1000Hz im ersten Wegmesssystem ermittelt wird und somit mit einer Verzögerung von 1ms an die Maschinensteuerung bereitgestellt werden kann. Eine Verarbeitung des ersten Positionssignals in der Maschinensteuerung erfolgt exemplarisch in 1ms. Somit beträgt ein Positionsfehler für die Ansteuerung der Antriebseinrichtung, der sich aufgrund der Verzögerungen im ersten Wegmesssystem und in der Maschinensteuerung ergibt, aufgrund der gesamten zeitlichen Verzögerung für die Nutzung des Positionssignals von 2ms bei maximaler Geschwindigkeit des Werkzeugträgers von 200mm/s zu 0,4mm. Allerdings kann dieses erste Positionssignal noch zusätzliche Fehler aufweisen, die in der technischen Ausführung und/oder in der Anbringung des ersten Wegmesssystems begründet sind, so dass die Maschinensteuerung bei der Ansteuerung der Antriebseinrichtung möglicherweise von einer falschen Positionsinformation ausgeht. Um die Richtigkeit des ersten Positionssignals überprüfen zu können ist erfindungsgemäß die Nutzung eines zweiten Positionssignals eines zweiten Wegmesssystems vorgesehen. Das zweite Wegmesssystem ist dazu ausgebildet, ein zweites Positionssignal mit hoher Genauigkeit und Zuverlässigkeit bereitzustellen. Ein Arbeitstakt des zweiten Wegmesssystems kann exemplarisch mit 100Hz angenommen werden, wodurch sich bei maximaler Geschwindigkeit des Werkzeugträgers von 200mm/s bereits aufgrund des langsameren Arbeitstakts des zweiten Wegmesssystems ein Positionsfehler von 2mm ergibt. Bei einem Einsatz an einer Umformeinrichtung wäre die alleinige Verwendung des zweiten Positionssignals des zweiten Wegmesssystems für die Ansteuerung der Antriebseinrichtung durch die Maschinensteuerung nur bedingt geeignet, da sich aufgrund der verzögerten Signalbereitstellung ein nicht akzeptabler Positionsfehler für den Werkzeugträger gegenüber dem Maschinenbett ergeben würde. Erfindungsgemäß wird das zweite Positionssignal für eine Bestätigung des ersten Positionssignals herangezogen, um an einer vorgebbaren Position, an der beispielsweise durch die Überwachungseinrichtung eine Entscheidung darüber treffen muss, ob eine Deaktivierung wenigstens eines Strahlungsdetektors erfolgen kann, durch Vergleich der beiden Positionssignale ermitteln kann, ob das erste Positionssignal, das die Maschinensteuerung verwendet, im Rahmen eines vorgebbaren Toleranzbereichs korrekt ist. Bei dem Toleranzbereich handelt es sich exemplarisch um eine Wegdifferenz zwischen den beiden Positionssignalen. Somit kann die Überwachungseinrichtung beispielsweise für den Fall, dass bei dem Vergleich der Positionssignale der vorgegebene Toleranzbereich, also die Differenz zwischen dem ersten und dem zweiten Positionssignal unterschritten ist, eine Schließbewegung des Werkzeugträgers gegenüber dem Maschinenbett weiter zulassen. Andernfalls ist die Überwachungseinrichtung dazu ausgebildet, eine Bereitstellung des Abschaltsignals an die Trenneinrichtung vorzunehmen, um eine weitere Bewegung, insbesondere eine Schließbewegung des Werkzeugträgers gegenüber dem Maschinenbett, zu stoppen. Dies ist der Fall, wenn aufgrund des Vergleichs zwischen dem ersten und dem zweiten Positionssignal eine Differenz entsprechend dem vorgegebenen Toleranzbereich überschritten ist, so dass davon ausgegangen werden muss, dass das erste Positionssignal, das von der Maschinensteuerung zur Ansteuerung der Antriebseinrichtung verwendet wird, nicht korrekt ist.

Vorteilhafte Weiterbildungen der Erfindung sind Gegenstand der Unteransprüche.

In einer Ausgestaltung der Erfindung ist vorgesehen, dass das erste Wegmesssystem oder das erste Wegmesssystem und die Maschinensteuerung gemäß einer ersten Sicherheitskategorie eines Sicherheitsstandards ausgebildet ist oder sind und dass die Überwachungseinrichtung und die Trenneinrichtung zusammen mit dem zweiten Wegmesssystem ein sicheres Arbeitssystem bilden, das gemäß einer zweiten Sicherheitskategorie des Sicherheitsstandards ausgebildet ist, wobei die zweite Sicherheitskategorie auf einem höheren Niveau als die erste Sicherheitskategorie innerhalb des Sicherheitsstandards angesiedelt ist.

Als Sicherheitsstandards stehen beispielsweise nationale oder internationale Normen wie die EN ISO 13849-1 und die EN/IEC 62061 zur Verfügung, in denen beispielsweise die Anforderungen an die Zuverlässigkeit und/oder an ein definiertes Verhalten von Maschinen und zugehörigen Maschinenkomponenten im Überwachungsfall festgelegt sind und in denen die Betriebssicherheit bzw. Ausfallsicherheit der Komponenten üblicherweise in klar voneinander abgrenzbaren Sicherheitsklassen oder Sicherheitskategorien eingeordnet ist. Typischerweise muss eine Komponente, die einer bestimmten Sicherheitskategorie eines Sicherheitsstandards zugeordnet werden soll, durch den Hersteller und/oder durch ein unabhängiges Prüfinstitut daraufhin untersucht und gegebenenfalls zertifiziert werden, ob sie sämtliche Anforderungen der jeweiligen Sicherheitskategorie erfüllt. Praktisch kann dies beispielsweise bedeuten, dass die Komponenten, die der höheren Sicherheitskategorie zuzurechnen sind, eine höhere Zuverlässigkeit und damit eine geringere Ausfallwahrscheinlichkeit aufweisen als die Komponenten, die der niedrigeren Sicherheitskategorie zuzurechnen sind.

Die Auslegung von Maschinenkomponenten auf die Anforderungen der jeweils angestrebten Sicherheitskategorie kann bei der Konstruktion und Herstellung der Komponenten und gegebenenfalls auch bei der Integration dieser Komponenten in die jeweilige Maschine einen erheblichen Aufwand bedeuten und damit die Herstellungskosten für die Maschine beeinträchtigen. Somit ist es zweckmäßig, eine möglichst geringe Zahl von Maschinenkomponenten gemäß einer hohen Sicherheitskategorie eines Sicherheitsstandards auszubilden, während die übrigen Komponenten der Maschine gemäß niedrigeren Sicherheitskategorien und damit kostengünstiger ausgebildet sind.

Ferner ist zu berücksichtigen, dass aufgrund der Eingruppierung der Überwachungseinrichtung, der Trenneinrichtung und des zweiten Wegmesssystems in eine zweite, höhere Sicherheitskategorie auch in Kauf genommen werden muss, dass eine Bereitstellung und Verarbeitung von Signalen, insbesondere der zweiten Positionssignale, mit einer geringeren Geschwindigkeit vorgenommen wird, als dies für das erste Wegmesssystem und die Maschinensteuerung der Fall ist, die der ersten, niedrigeren Sicherheitskategorie zugehörig sind. Dementsprechend kann das zweite Wegmesssystem keine Bereitstellung des zweiten Positionssignals in Echtzeit oder mit einer geringen Verzögerung gegenüber Echtzeit vornehmen, vielmehr ist aufgrund der notwendigen Sicherheitsarchitektur für das zweite Wegmesssystem eine langsamere Signalverarbeitung hinzunehmen, wodurch die geringere Frequenz für den Arbeitstakt des zweiten Wegmesssystems begründet ist.

Erfindungsgemäß ist die Systemgrenze für das sichere Arbeitssystem um die Gruppe von Komponenten der Umformeinrichtung, die gemäß einer gemeinsamen, hohen Sicherheitskategorie ausgebildet sind, eng gezogen, um die Anzahl der Komponenten im sicheren Arbeitssystem und damit die Kosten für das sichere Arbeitssystem gering zu halten.

Vorliegend sind lediglich die Überwachungseinrichtung, die die Relativbewegung des Werkzeugträgers gegenüber dem Maschinenbett überwacht, sowie die Trenneinrichtung, die im Überwachungsfall zur Abtrennung der Energieversorgung für die Antriebseinrichtung ausgebildet ist, und das zweite Wegmesssystem als Bestandteile des sicheren Arbeitssystems vorgesehen. Vorzugsweise ist die Überwachungseinrichtung als eigenständige Komponente ausgebildet, die auch an eine bestehende Umformeinrichtung nachgerüstet werden kann, ohne tiefgehende Eingriffe an der Maschinensteuerung vornehmen zu müssen, ausgebildet. Besonders bevorzugt ist die Überwachungseinrichtung manuell oder motorisch verstellbar an dem zur Aufnahme eines Werkzeugs vorgesehenen Werkzeugträger angebracht und ist für eine Kommunikation mit der Maschinensteuerung ausgebildet. Dadurch können beispielsweise werkzeugspezifische Kennwerte wie eine Ausdehnung des Werkzeugs und eine Ausdehnung eines am Maschinenbett festzulegenden Gegenwerkzeugs längs der Schließrichtung des Werkzeugs gegenüber dem Gegenwerkzeug sowie gegebenenfalls die Materialstärke des zu bearbeitenden Werkstücks an die Überwachungseinrichtung bereitgestellt werden, um diese in geeigneter Weise längs der Schließrichtung am Werkzeugträger positionieren zu können.

Mit Hilfe der Maschinensteuerung und des ersten Wegmesssystems wird die Relativposition des Werkzeugträgers gegenüber dem Maschinenbett ermittelt und ein Prüfsignals bei Erreichen einer vorgebbaren Relativposition während eines Annäherungsvorgangs des Werkzeugträgers an das Maschinenbett bereitgestellt. Mit Hilfe des ersten Wegmesssystems kann die Position des Werkzeugträgers längs der Schließrichtung gegenüber dem Maschinenbett oder einem am Maschinenbett anbringbaren Gegenwerkzeug gesteuert oder geregelt werden, wobei für die nachstehenden Ausführungen aus Gründen der Vereinfachung eine Beschränkung auf den Begriff des Maschinenbetts stattfindet, der das gegebenenfalls vorgesehene Gegenwerkzeug umfassen soll. Dabei sind das erste Wegmesssystem und die Maschinensteuerung im Sinne des Sicherheitsstandards, der der Konzeption der Umformeinrichtung zugrundeliegt, für sich allein betrachtet nicht ausreichend sicher, um einen Betrieb der Umformeinrichtung gewährleisten zu können, bei dem Verletzungen eines Bedieners mit der vom Sicherheitsstandard geforderten Sicherheit ausgeschlossen werden können. Dementsprechend ist die Maschinensteuerung primär für die Steuerung oder Regelung des Umformvorgangs vorgesehen, jedoch nicht für deren sicherheitstechnische Überwachung.

Die Maschinensteuerung leistet im Hinblick auf Sicherheitsfunktionen, mit denen Verletzungen eines Bedieners mit der vom Sicherheitsstandard geforderten Sicherheit ausgeschlossen werden können, dahingehend einen Beitrag, dass bei Erreichen einer vorgebbaren Relativposition während eines Annäherungsvorgangs des Werkzeugträgers an das Maschinenbett ein Prüfsignal an die Überwachungseinrichtung bereitgestellt wird. Dieses Prüfsignal ist derjenigen Sicherheitskategorie zuzurechnen, die die Maschinensteuerung innerhalb des Sicherheitsstandards einnimmt. Da die Sicherheitskategorie der Maschinensteuerung erfindungsgemäß niedriger als die Sicherheitskategorie der Überwachungseinrichtung ist, wird das Prüfsignal umgangssprachlich auch als "unsicher" bezeichnet. Das Prüfsignal dient dazu, in der Überwachungseinrichtung einen vorgegebenen und mit der Sicherheitskategorie der Überwachungseinrichtung durchzuführenden Prüfungsschritt auszulösen, mit dessen Hilfe eine Aussage über die tatsächliche Position des Werkzeugträgers gegenüber dem Maschinenbett getroffen werden kann. Diese Aussage wird auf dem Niveau der Sicherheitskategorie der Überwachungseinrichtung getroffen und wird daher umgangssprachlich als "sichere" Aussage bezeichnet. Für diese "sichere" Aussage bedient sich die Überwachungseinrichtung des zweiten Positionssignals des zweiten Wegmesssystems. Da dieses zweite Positionssignal jedoch erst mit einer Zeitverzögerung bereitgestellt wird, ist die Überwachungseinrichtung dazu eingerichtet, das zeitverzögerte zweite Positionssignal mit dem in Echtzeit oder zumindest nahezu in Echtzeit bereitgestellten ersten Positionssignal zu vergleichen und zu einem positiven Vergleichsergebnis zu gelangen, wenn die Differenz zwischen dem ersten und dem zweiten Positionssignal den vorgebbaren Toleranzbereich nicht überschreitet. In diesem Fall kann dann von der Überwachungseinrichtung auf eine Ansteuerung der Trenneinrichtung verzichtet werden, so dass die Bewegung des Werkzeughalters fortgesetzt werden kann. Ferner kann die Überwachungseinrichtung in diesem Fall einen oder mehrere Strahlungsdetektoren deaktivieren, die zur Absicherung des verbleibenden Arbeitsspalts zwischen dem am Werkzeughalter aufgenommenen Werkzeug und dem Maschinenbett oder einem dem Maschinenbett zugeordneten Gegenwerkzeug vorgesehen sind. Hierbei wird davon ausgegangen, dass sich bei schließendem Arbeitsspalt auch die Gefahrenzone verkleinert, die mit Hilfe der Strahlungsquelle und der Strahlungsdetektoren überwacht werden muss, so dass sukzessive eine Deaktivierung oder Ausblendung der einzelnen Strahlungsdetektoren vorgenommen werden kann.

Üblicherweise handelt es sich bei der Gefahrenzone um einen im Wesentlichen quaderförmigen Raumabschnitt, der sich von der Arbeitskante des Werkzeugs in Schließrichtung bis zum Maschinenbett erstreckt und der bei einer Arbeitsbewegung des Werkzeugs gegenüber dem Maschinenbett verkleinert wird, so dass die Gefahr eines Quetschens von Körperteilen besteht. Vorzugsweise ist die Überwachungseinrichtung sowohl für eine Überwachung der Gefahrenzone als auch für eine Überwachung einer an die Gefahrenzone angrenzenden, quer zur Schließbewegungsrichtung erstreckten Sicherheitszone ausgebildet. Diese Sicherheitszone ist in ihrer Erstreckung quer zur Schließbewegungsrichtung vorzugsweise variabel ausgestaltet. Vorzugsweise variiert die Erstreckung der Sicherheitszone in dieser Richtung in Abhängigkeit vom Abstand zwischen Werkzeug und Maschinenbett und/oder in Abhängigkeit von der Bewegungsgeschwindigkeit des Werkzeugs gegenüber dem Maschinenbett. Die Erstreckung der Sicherheitszone wird von der Anordnung der Strahlungsdetektoren sowie von der Einbeziehung der Signale der einzelnen Strahlungsdetektoren durch die Überwachungseinrichtung bestimmt.

In weiterer Ausgestaltung der Erfindung ist vorgesehen, dass das zweite Wegmesssystem für eine Ermittlung des zweiten Positionssignals auf der Basis von wenigstens zwei voneinander unabhängigen internen Wegsignalen oder auf der Basis eines internen Wegsignals und eines externen Wegsignals, insbesondere des ersten Positionssignals, ausgebildet ist. Um eine zuverlässige Bereitstellung des zweiten Positionssignals zu ermöglichen benötigt das zweite Wegmesssystem wenigstens eine Kontrollinformation, um überprüfen zu können, ob Maßverkörperungen wie Glasmaßstäbe oder Abtastsensoren zur Abtastung der Maßverkörperungen korrekt angeordnet sind und korrekt arbeiten. Hierzu kann wahlweise vorgesehen sein, dass das zweite Wegmesssystem zwei voneinander unabhängig ermittelte, interne Wegsignale verarbeitet oder dass das zweite Wegmesssystem ein intern ermitteltes Wegsignal mit dem Positionssignal des ersten Wegmesssystems vergleicht. Exemplarisch wird davon ausgegangen, dass eine Bereitstellung des oder der internen Wegsignale in Echtzeit erfolgt, während eine Verarbeitung des oder der internen Wegsignale und des gegebenenfalls hinzugezogenen ersten Positionssignals aufgrund der sicherheitsgerichteten Ausgestaltung des zweiten Wegmesssystems nur mit einer Verzögerung erfolgt, der dann beim Vergleich des ersten und des zweiten Positionssignals in der Überwachungseinrichtung im Rahmen des vorgebbaren Toleranzbereichs berücksichtigt wird.

Vorteilhaft ist es, wenn ein erster Strahlungsdetektor längs einer Schließbewegungsrichtung des Werkzeugträgers mit einem Abstand von der Arbeitskante des Werkzeugs entfernt angeordnet ist, der zumindest einem Nachlaufweg des Werkzeugträgers bei Abschaltung der Antriebseinrichtung aus einer ersten Bewegungsgeschwindigkeit, insbesondere einem Schnellgang, entspricht. Die Aufgabe für den ersten Strahlungsdetektor besteht darin, eine sichere Abschaltung der Antriebseinrichtung innerhalb des Nachlaufwegs, also desjenigen Bremswegs, den die Antriebseinrichtung zur Abbremsung des Werkzeugträgers ausgehend von der ersten Bewegungsgeschwindigkeit bis zum Stillstand benötigt, zu gewährleisten. Beispielsweise muss gewährleistet sein, dass bei Unterbrechung des Strahlenbündels, das den ersten Strahlungsdetektor beaufschlagt, beispielsweise durch die Hand eines Benutzers, der in den Gefahrenbereich eingreift, der Werkzeugträger so schnell zum Stillstand gebracht werden kann, dass die Hand des Benutzers nicht zwischen Werkzeug und Maschinenbett eingequetscht wird.

Die Aufgabe der Erfindung wird gemäß einem zweiten Aspekt durch ein Verfahren zum Betreiben einer Umformeinrichtung, die nach einem der Ansprüche 1 bis 5 ausgebildet ist, gelöst. Hierbei sind die folgenden Schritte vorgesehen: Durchführen einer Annäherungsbewegung des Werkzeugträgers gegenüber dem Maschinenbett mit einer ersten Bewegungsgeschwindigkeit, Überwachung einer Strahlungsbeaufschlagung von mehreren Strahlungsdetektoren mittels der Überwachungseinrichtung, Ermitteln einer Position des Werkzeugträgers längs der Schließbewegungsrichtung durch die Maschinensteuerung anhand von Positionssignalen des ersten Wegmesssystems und Bereitstellen eines Prüfsignals von der Maschinensteuerung an die Überwachungseinrichtung bei Erreichen einer vorgebbaren, von der Maschinensteuerung ermittelten Relativposition, Vergleichen des ersten Positionssignals mit dem zweiten Positionssignal in der Überwachungseinrichtung und Deaktivierung wenigstens eines Strahlungsdetektors, wenn bei dem Vergleich eine Differenz zwischen dem ersten und dem zweiten Positionssignal unterschritten ist, so dass eine Schließbewegung des Werkzeugträgers gegenüber dem Maschinenbett fortgesetzt werden kann.

In weiterer Ausgestaltung des Verfahren ist vorgesehen, dass nach Bereitstellung des Prüfsignals von der Maschinensteuerung an die Überwachungseinrichtung eine Abbremsung der Antriebseinrichtung auf eine zweite, geringere Bewegungsgeschwindigkeit erfolgt, wenn bei dem Vergleich der Positionssignale die Differenz zwischen dem ersten und dem zweiten Positionssignal unterschritten ist, wobei mit dem Beginn der Abbremsung auf die zweite Bewegungsgeschwindigkeit eine Deaktivierung derjenigen Strahlungsdetektoren vorgenommen wird, die in einer gemeinsamen, quer zur Schließbewegungsrichtung ausgerichteten ersten Ebene mit dem ersten Strahlungsdetektor angeordnet sind. Erfindungsgemäß wird das Prüfsignal von der Maschinensteuerung dann bereitgestellt, wenn die Maschinensteuerung anhand der ihr zur Verfügung stehenden, gemäß der Sicherheitskategorie der Maschinensteuerung und des zugehörigen Wegmesssystems "unsicheren" Informationen davon auszugehen hat, dass das Werkzeug zumindest noch um den Nachlaufweg entfernt von dem zu deformierenden Werkstück positioniert ist. Sofern diese Annahme der Maschinensteuerung von der Überwachungseinrichtung durch Vergleich der Positionssignale des ersten und zweiten Wegmesssystems bestätigt werden kann, wird eine Abbremsung des Werkzeugträgers von der ersten Bewegungsgeschwindigkeit auf die zweite Bewegungsgeschwindigkeit hervorgerufen, damit das Werkzeug bei Berührung des Werkstücks die zweite Bewegungsgeschwindigkeit, die für die Deformation des Werkstücks vorteilhaft ist, zuverlässig erreicht hat.

In weiterer Ausgestaltung des Verfahrens ist vorgesehen, dass mit dem Beginn der Abbremsung auf die zweite Bewegungsgeschwindigkeit wenigstens ein Strahlungsdetektor, der in einer parallel zur ersten Ebene angeordneten, zweiten Ebene angeordnet ist, die einen geringeren Abstand zur Arbeitskante des Werkzeugs als die erste Ebene aufweist, nach Ablauf einer vorgebbaren Zeitdauer deaktiviert wird. Der wenigstens eine auf der zweiten Ebene angeordnete Strahlungsdetektor dient zur Überwachung des Sicherheitsbereichs oder des Gefahrenbereichs nach dem Zeitpunkt der Bereitstellung des Prüfsignals durch die Maschinensteuerung. Da unmittelbar nach der Bereitstellung des Prüfsignals in jedem Fall eine Abbremsung des Werkzeugträgers vorgesehen ist, entweder um die Bearbeitung des Werkstücks vorzunehmen oder um die Umformeinrichtung in einen sicheren Zustand zu bringen, sind die Anforderungen an die Überwachung des Sicherheitsbereichs und des Gefahrenbereich ab diesem Zeitpunkt niedriger, so dass eine zeitgesteuerte Überwachung durch den wenigstens einen auf der zweiten Ebene angeordneten Strahlungsdetektor, bei dem es sich insbesondere um einen im Sicherheitsbereich angeordneten und damit dem Gefahrenbereich vorgelagerten Strahlungsdetektor handeln kann, als ausreichend angesehen wird, um das erforderliche Sicherheitsniveau zu gewährleisten.

In weiterer Ausgestaltung des Verfahrens ist vorgesehen, dass nach der Bereitstellung des Prüfsignals keine Überwachung der jeweils deaktivierten Strahlungsdetektoren vorgenommen wird und lediglich ein Ausbleiben von Strahlen auf aktiven Strahlungsdetektoren zur Bereitstellung des Abschaltsignals an die der Antriebseinrichtung vorgeschaltete Trenneinrichtung führt.

In weiterer Ausgestaltung des Verfahrens ist vorgesehen, dass bei Erreichen der zweiten Bewegungsgeschwindigkeit eine Deaktivierung sämtlicher Strahlungsdetektoren vorgenommen wird. Die zweite Bewegungsgeschwindigkeit ist so gewählt, dass gemäß den derzeit zu beachtenden Sicherheitsvorschriften keine zusätzliche Überwachung des Gefahrenbereichs und/oder des Sicherheitsbereichs erforderlich ist. Exemplarisch beträgt die zweite Bewegungsgeschwindigkeit, die auch als "Schleichgang" bezeichnet wird, zwischen ca. 10mm/Sekunde und 20mm/Sekunde.

In weiterer Ausgestaltung des Verfahrens ist vorgesehen, dass die Bereitstellung des Prüfsignals an der vorgebbaren Relativposition vom ersten Wegmesssystem und der Maschinensteuerung in einer niedrigeren Sicherheitskategorie gemäß einem vorgebbaren Sicherheitsstandard vorgenommen wird als die Überprüfung der ermittelten Relativposition anhand eines Positionssignals des zweiten Wegmesssystems, das einer höheren Sicherheitskategorie als das erste Wegmesssystem zugehörig ist. Damit erfolgt die Ausgabe des Prüfsignals anhand von Informationen, die auf das weniger sichere erste Wegmesssystem und die weniger sichere Maschinensteuerung zurückzuführen sind und die daher mit einer höheren Wahrscheinlichkeit fehlerbehaftet sind als das Ergebnis der Überprüfung der tatsächlichen Position des Werkzeugträgers und des daran angebrachten Werkzeugs mittels des zweiten Wegmesssystems, das verglichen mit dem ersten Wegmesssystem und der Maschinensteuerung einer höheren Sicherheitskategorie des vorgebbaren Sicherheitsstandards zugehörig ist und daher ein Positionssignal liefert, das mit größerer Wahrscheinlichkeit richtig ist als dies für das Positionssignal des ersten Wegmesssystems der Fall ist. Durch die Überprüfung des Positionssignals des ersten Wegmesssystems anhand des Positionssignals des zweiten Wegmesssystems kann das weniger sichere Positionssignals der Maschinensteuerung, das zumindest nahezu in Echtzeit bereitsteht, für den vollständigen Bewegungsablauf in der Umformeinrichtung genutzt werden. An kritischen Positionen für den Werkzeugträger wird mit Hilfe des Positionssignals des zweiten Wegmesssystems die Richtigkeit des Positionssignals des ersten Wegmesssystems geprüft, so dass ein unsicherer Zustand der Umformeinrichtung mit großer Wahrscheinlichkeit ausgeschlossen werden kann, wie nachstehend ausgeführt wird.

Sofern das "unsichere" Positionssignal des ersten Wegmesssystems und der Maschinensteuerung positiv falsch sein sollte, die Maschinensteuerung also von einem geringeren Abstand zwischen Werkzeugträger und Maschinenbett ausgeht, als dies tatsächlich der Fall ist, wird das Prüfsignal von der Maschinensteuerung zu früh ausgegeben, so dass es nicht in den Toleranzbereich des später ermittelten Positionssignals des zweiten Wegmesssystems fällt. In diesem Fall erfolgt durch Ansteuerung der Trenneinrichtung eine Abschaltung der Antriebseinrichtung, da von einem Fehlerfall ausgegangen wird. Sofern das "unsichere" Positionssignal negativ falsch sein sollte, die Maschinensteuerung also von einem größeren Abstand zwischen Werkzeugträger und Maschinenbett ausgeht, als dies tatsächlich der Fall ist, findet bereits vor der Bereitstellung des Prüfsignals eine Abdeckung des ersten Strahlungsdetektors statt. Hieraus folgt unmittelbar eine Abschaltung der Antriebseinrichtung durch ein Abschaltsignal von der Überwachungseinrichtung an die der Antriebseinrichtung vorgeschaltete Trenneinrichtung.

Lediglich für den Fall, dass das erste Wegmesssystem und die Maschinensteuerung die Position des Werkzeugträgers gegenüber dem Maschinenbett korrekt ermittelt haben und somit auch das Prüfsignal zu einem Zeitpunkt bereitstellen, zu dem der erste Strahlungsdetektor noch nicht vom Maschinenbett abdeckt ist und das Positionssignal des ersten Wegmesssystems in dem vorgebbaren Toleranzbereich um das Positionssignal des zweiten Wegmesssystems liegt, wird das Positionssignal des ersten Wegmesssystems von der Überwachungseinrichtung als korrekt bewertet und ein weiterer Betrieb der Umformeinrichtung zugelassen.

Eine vorteilhafte Ausführungsform der Erfindung ist in der Zeichnung dargestellt. Dabei zeigt:
- Figur 1: eine schematische Darstellung einer Gesenkbiegemaschine mit einer Überwachungseinrichtung und einer endseitig an einer Matrize angebrachten Sicherungseinrichtung,
- Figur 2: ein schematisches Weg-Zeit-Diagramm für eine Bewegung des Werkzeughalters gegenüber dem Maschinenbett,
- Figur 3: eine Seitenansicht einer ersten Ausführungsform einer Empfangseinrichtung der Überwachungseinrichtung und
- Figur 4: eine Seitenansicht einer zweiten Ausführungsform einer Empfangseinrichtung der Überwachungseinrichtung.

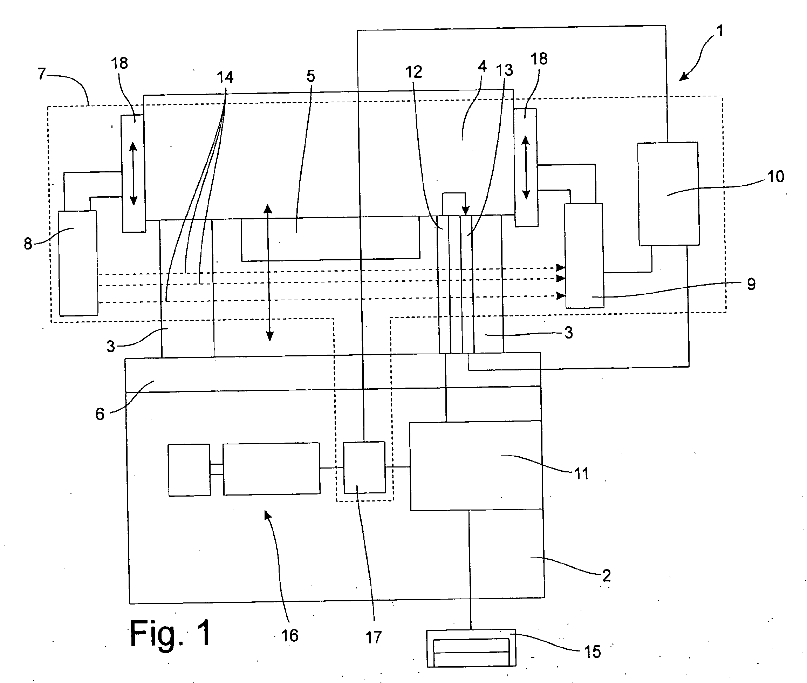

Eine gemäß der Figur 1 exemplarisch als Gesenkbiegemaschine 1 ausgebildete Umformmaschine umfasst ein Maschinenbett 2, an dem zwei Führungsstangen 3 angebracht sind, die für eine linearbewegliche Lagerung eines Werkzeugträgers 4 ausgebildet sind. Der Werkzeugträger 4 kann linear längs der Führungsstangen 3 bewegt werden, um einen als Werkzeug dienenden Stempel 5 gegenüber einer Matrize 6 zu bewegen. Bei einer Bewegung des Stempels 5 in eine Schließbewegungsrichtung wird ein Spalt zwischen dem Stempel 5 und der Matrize 6 verkleiner, so dass eine Deformation eines nicht dargestellten, in den Spalt zwischen Stempel 5 und Matrize 6 einschiebbaren Werkstücks ermöglicht wird.

Die Gesenkbiegemaschine 1 ist mit einer exemplarisch aus mehreren Komponenten aufgebauten Überwachungseinrichtung 7 ausgestattet, die dazu vorgesehen ist, die Verletzungsgefahr durch die Gesenkbiegemaschine 1 zu minimieren und einen raschen und störungsfreien Bearbeitungsablauf für die zu bearbeitenden Werkstücke zu gewährleisten. Exemplarisch umfasst die Überwachungseinrichtung 7 ein am Werkzeugträger 4 angebrachtes Lichtgitter, dessen Detektionsstrahlen 14 parallel zu einer längsten Kante der Matrize 6 ausgerichtet sind und die zwischen einer Sendeeinrichtung 8 und einer Empfangseinrichtung 9 verlaufen. Die Empfangseinrichtung 9 des Lichtgitters stellt jeweils elektrische Schaltsignale an eine Auswerteeinrichtung 10 bereit, wenn Detektionsstrahlen 14 des Lichtgitters unterbrochen werden, wobei die Auswerteeinrichtung 10 eine weitere Komponente der Überwachungseinrichtung 7 bildet.

Die Gesenkbiegemaschine 1 umfasst eine Maschinensteuerung 11, die mit einem ersten Wegmesssystem 12 und mit einem Fußschalter 15 jeweils elektrisch gekoppelt ist. Die Maschinensteuerung 11 kann exemplarisch als numerische Computersteuerung (CNC-Steuerung, computer numerical control) ausgebildet sein. Die Maschinensteuerung 11 ermöglicht die Eingabe von Informationen über die Geometrien des Stempels 5, der Matrize 6 und des nicht dargestellten Werkstücks sowie über die gewünschte Deformation des Werkstücks durch einen Benutzer und ermittelt daraus den Bewegungsablauf für den Stempel 5 gegenüber der Matrize 6. Der Fußschalter 15 ermöglicht die Auslösung des Bewegungsablaufs durch einen Bediener. Exemplarisch ist vorgesehen, dass das erste Wegmesssystem 12 und die Maschinensteuerung 11 gemäß einer ersten Sicherheitskategorie eines Sicherheitsstandards ausgebildet sind. Beispielhaft ist das erste Wegmesssystem 12 dazu ausgebildet, das erste Positionssignal in Echtzeit mit einer auch als Arbeitstakt bezeichneten Taktfrequenz von 1000Hz entsprechend einer Taktrate von 1ms an die Maschinensteuerung 11 bereitzustellen. Ferner ist exemplarisch vorgesehen, dass die Maschinensteuerung eine Verarbeitung des ersten Positionssignals ebenfalls mit einer Taktfrequenz von 1000Hz vornimmt, so dass ein von der Maschinensteuerung 11, insbesondere an die Überwachungseinrichtung 7, ausgegebenes erstes Positionssignal mit einer maximalen Zeitverzögerung von 2ms nach Erfassung bereitgestellt wird, was vorliegend ebenfalls noch als Echtzeit angesehen wird.

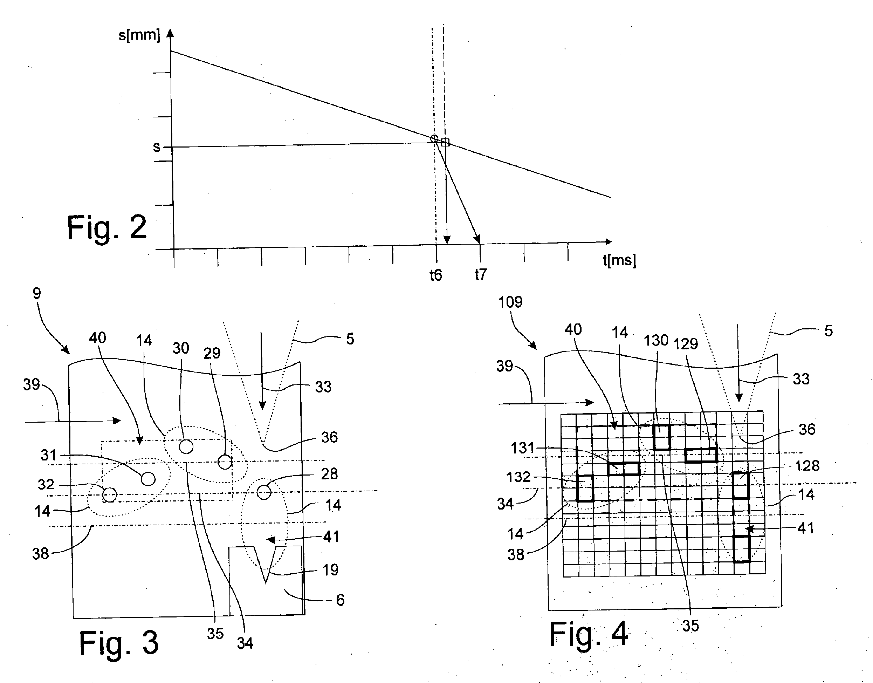

Ferner umfasst die Gesenkbiegemaschine 1 ein zweites Wegmesssystem 13, das als weitere Komponente der Überwachungseinrichtung 7 ausgebildet ist und exemplarisch mit der Auswerteeinrichtung 10 gekoppelt ist. Die Überwachungseinrichtung 7 und die Trenneinrichtung 17 bilden vorliegend zusammen mit dem zweiten Wegmesssystem 13 ein sicheres Arbeitssystem, das gemäß einer zweiten Sicherheitskategorie des Sicherheitsstandards ausgebildet ist, wobei die zweite Sicherheitskategorie auf einem höheren Niveau als die erste Sicherheitskategorie innerhalb des Sicherheitsstandards angesiedelt ist. Durch die Eingruppierung des zweiten Wegmesssystems 13 in die höhere Sicherheitskategorie ist es erforderlich, dass das zweite Wegmesssystem zum einen wenigstens zwei voneinander unabhängige Wegsignale verarbeitet, um mögliche Messfehler zumindest weitestgehend eliminieren zu können. Exemplarisch ist vorgesehen, dass das zweite Wegmesssystem 13 zu diesem Zweck das erste Positionssignal als externes Wegsignal eingespeist bekommt. Ferner ist aufgrund der Anforderungen der höheren Sicherheitskategorie, die für das zweite Wegmesssystem 13 gilt, auch eine umfangreichere Berechnung und Prüfung des zweiten Positionssignals erforderlich, so dass eine Ausgabe des zweiten Positionssignals von dem zweiten Wegmesssystem 13 an die Auswerteeinrichtung 10 mit einer niedrigen Taktfrequenz, exemplarisch mit einer Taktfrequenz von 100 Hertz entsprechend einer Taktrate von 10ms erfolgt. In der Figur 2 ist ein schematisches Weg-Zeit-Diagramm oder s/t-Diagramm dargestellt, in dem eine lineare Bewegung des Werkzeugträgers 4 über der Zeit gezeigt ist. Mit Hilfe des ersten Wegmesssystems 12 und der Maschinensteuerung 11 kann die Bewegung des Werkzeugträgers 4 in Echtzeit, exemplarisch mit einem maximalen Zeitverzug von 2ms, gesteuert oder geregelt werden. Die an der X-Achse (Zeitachse) angetragene Skalierung entspricht dem Arbeitstakt des zweiten Wegmesssystems 13, das exemplarisch alle 10ms einen Positionswert für den Werkzeugträger 4 ermitteln kann. Beispielhaft benötigt das zweite Wegmesssystem auch zumindest nahezu 10ms, um aus einem ermittelten Wegsignal ein zweites Positionssignal zu erzeugen. Wenn beispielsweise kurz nach dem Zeitpunkt t6 von der Maschinensteuerung 11 ein Prüfsignal ausgegeben wird, da die Maschinensteuerung 11 zu der Auffassung gelangt ist, dass ein gewünschter Zielort s erreicht ist, so ist es für einen Weiterbetrieb der Gesenkbiegemaschine 1 erforderlich, den ermittelten Ort zu prüfen, was mit Hilfe des bereits zum Zeitpunkt t6 ermittelten, jedoch erst zum Zeitpunkt t7 an der Verarbeitungseinrichtung 10 eintreffenden Positionssignals des zweiten Wegmesssystems 13 in nachstehend näher beschriebener Weise erfolgt.

Für die Einleitung einer Bewegung auf den in der Fig.1 dargestellten Werkzeugträger 4 und den daran aufgenommenen Stempel 5 umfasst die Gesenkbiegemaschine 1 exemplarisch eine elektrisch betreibbare Hydraulikpumpe 16, die einen Ölstrom an nicht dargestellte, den Führungsstangen 3 zugeordnete Hydraulikzylinder bereitstellen kann.. Für die Bereitstellung der hierzu notwendigen elektrischen Energie ist die Hydraulikpumpe 16 elektrisch mit der Maschinensteuerung 11 verbunden. Für einen sicheren Betrieb der Hydraulikpumpe 16 ist in die elektrische Verbindung zur Maschinensteuerung 11 eine Trenneinrichtung 17 eingeschleift, die von der Auswerteeinrichtung 10 angesteuert werden kann und die ebenfalls eine Komponente der Überwachungseinrichtung 7 bildet.

Um eine Anpassung der Position des Lichtgitters, also der Sendeeinrichtung 8 und der Empfangseinrichtung 9, an unterschiedliche Stempel 5 zu ermöglichen, sind die Sendeeinrichtung 8 und die Empfangseinrichtung 9 jeweils linearbeweglich mittels Führungsmitteln 18 am Werkzeugträger 4 aufgenommen. Vorzugsweise sind die Führungsmittel 18 für die Sendeeinrichtung 8 und die Empfangseinrichtung 9 derart miteinander bewegungsgekoppelt, dass eine synchrone Verstellung der beiden Führungsmittel 18 gewährleistet ist.

Für die Durchführung eines Bewegungsablaufs für den Werkzeugträger 4 und den daran angebrachten Stempel 5 unter Aufsicht durch die Überwachungseinrichtung 7 ist es vorgesehen, einen unterbrochenen untersten Detektionsstrahl 14 sowie ununterbrochene, darüberliegende Detektionsstrahlen 14 bei Erreichen einer vorgebbaren Relativposition des Stempels 5 gegenüber der am Maschinenbett 2 angebrachten Matrize 6 und dem nicht dargestellten, auf der Matrize 6 aufliegenden Werkstück zu ermitteln. Sofern die Detektionsstrahlen 14 in der vorstehend beschriebenen Weise auf die Empfangseinrichtung 9 auftreffen, kann von einer korrekten Positionierung des Stempels 5 gegenüber der Matrize 6 ausgegangen werden, die mit Hilfe der Überwachungseinrichtung 7 überprüft wird.

Die Matrize 6 weist eine in der Figur 3 schematisch näher dargestellte, exemplarisch V-förmig ausgeführte, nutartige Vertiefung 19 auf, die einen freien Strahlverlauf für den untersten Detektionsstrahl 14 bis in den Nutgrund gewährleistet.

Anhand der in Figur 3 dargestellten Seitenansicht einer ersten Ausführungsform der Empfangseinrichtung der Überwachungseinrichtung ist erkennbar, wie die einzelnen Strahlungsdetektoren 28 bis 32, bei denen es sich beispielsweise um diskret ausgebildete Fotodioden handeln kann, angeordnet sind und wie diese exemplarisch von entsprechenden Detektionsstrahlen 14 beleuchtet werden können. Exemplarisch werden die Strahlungsdetektoren 29 und 30 sowie 31 und 32 jeweils von einem gemeinsamen Detektionsstrahl 14 beleuchtet.

Die Position der Sendeeinrichtung 8 und der Empfangseinrichtung 9 wird durch entsprechende Verschiebung mit den Führungsmitteln 18 längs der Schließbewegungsrichtung 33 so eingestellt, dass ein Abstand des ersten Strahlungsdetektors 28 von der Arbeitskante 36 in Schließbewegungsrichtung 33 zumindest dem Nachlaufweg des Werkzeugträgers 4 entspricht.

In der Figur 3 ist eine mögliche Eingriffsrichtung 39 eines Benutzers in die von den Strahlungsdetektoren 28 bis 32 überwachten Sicherheits- und Gefahrenzonen 40, 41 dargestellt. Dabei stellt die Gefahrenzone 41 denjenigen Bereich dar, der während der Schließbewegung zwischen Stempel 5 und Matrize 6 vom Stempel 5 überfahren wird und in dem eine Quetschgefahr besteht. Die Sicherheitszone 40 ist derjenige der Gefahrenzone 41 vorgelagerte Raumbereich, in dem ein Eingriff eines Benutzers erfasst werden soll, um ein zuverlässiges Anhalten des Stempels 5 zu gewährleisten, bevor der Benutzer mit seinem Körperteil in gefährdender Weise in die Gefahrenzone 41 eindringt.

Bei der in Figur 4 dargestellten Ausführungsform einer Empfangseinrichtung 109 wird anstelle der als diskrete Fotodioden ausgebildeten Strahlungsdetektoren gemäß der Ausführungsform der Figur 3 eine Detektormatrix aus rasterartig in einer Rechteckform angeordneten Detektorzellen eingesetzt, bei der es sich exemplarisch um einen CCD-Sensor (charge coupled device) handelt. Dabei ist exemplarisch vorgesehen, dass jeweils mit zwei aneinandergrenzenden Detektorzellen die Strahlungsdetektoren 128 bis 132 gebildet werden. Eine derartige Detektormatrix ermöglicht auch eine Anpassung der Position der zu Überwachungszwecken eingesetzten Detektorzellen an die jeweiligen Randbedingungen der Werkstückbearbeitung. Ferner kann vorgesehen werden, dass die Detektorzellen beispielsweise bei vorschreitender Werkstückbearbeitung in gleicher Weise wie die Strahlungsdetektoren 28 bis 32 gemäß der Ausführungsform in Figur 3 deaktiviert werden oder in einer abweichenden Weise, die gegebenenfalls eine verbesserte Anpassung auf den Bearbeitungsvorgang ermöglicht.

Die Gesenkbiegemaschine 1 kann exemplarisch wie folgt betrieben werden: zunächst erfolgt in einer Ruhestellung des Werkzeugträgers 4, in der dieser einen maximalen Abstand zum Maschinenbett 2 und der daran angebrachten Matrize 6 einnimmt, ein Selbsttest des Lichtgitters. Hierbei wird überprüft, ob die Detektorstrahlen 14 beim Auftreffen auf die Strahlungsdetektoren 28 bis 32 entsprechende Signale auslösen. Ferner erfolgt eine Positionierung der Sende- und Empfangseinrichtung 8,9 des Lichtgitters mittels der Führungsmittel 18 an den am Werkzeugträger 4 aufgenommenen Stempel 5. Dabei findet eine Geometrie des Stempels 5 ebenso Berücksichtigung wie der Nachlaufweg des Werkzeugträgers 4, so dass der erste Strahlungsdetektor 28 derart gegenüber der Arbeitskante 36 des Stempels 5 angeordnet ist, dass der Abstand zwischen erstem Strahlungsdetektor 28 und der Arbeitskante 36 zumindest dem Nachlaufweg entspricht. Anschließend kann der Benutzer nach Auflegen des Werkstücks auf die Matrize 6 durch Betätigen des Fußschalters 15 die Bearbeitung auslösen. Hierzu ist ein vorgebbarer Bewegungsablauf für den Stempel 5 vorgesehen, der exemplarisch die folgenden Schritte umfassen kann. In einem ersten Schritt nach Betätigung des Fußschalters 15 wird der Werkzeugträger 4 auf eine erste Bewegungsgeschwindigkeit beschleunigt, die auch als "Schnellgang" oder "Eilgang" bezeichnet wird. Bei dieser schnellen Bewegung findet beispielhaft eine Überwachung der Strahlungsdetektoren 28 bis 32 statt. Sofern bei der Annäherung des Werkzeugträgers 4 an die Matrize 6 keine Unterbrechung zumindest eines der Detektionsstrahlen 14 detektiert wird, ermittelt die Maschinensteuerung 11 anhand der ersten Positionssignale des ersten Wegmesssystems 12 und in Kenntnis der Position des Lichtgitters gegenüber dem Werkzeugträger 4 denjenigen Ort, an dem beispielsweise eine Deaktivierung des ersten Strahlungsdetektors 28 vorgenommen werden muss, um eine anschließend zu erwartende Unterbrechung der auf den ersten Strahlungsdetektor 28 treffenden Detektionsstrahlen 14 durch die schematisch in der Figur 3 dargestellte Werkstückoberfläche 38 zu verhindern. An diesem von der Maschinensteuerung 11 ermittelten Ort wird von der Maschinensteuerung 11 ein Prüfsignal an die Überwachungseinrichtung 7 ausgegeben. Da das erste Wegmesssystem 12 und die Maschinensteuerung 11 gegenüber dem zweiten Wegmesssystem 13 und der Überwachungseinrichtung 7 in einer niedrigeren Sicherheitskategorie angeordnet sind, werden zwar sowohl das erste Positionssignal als auch das Prüfsignal in Echtzeit an die Überwachungseinrichtung 7 weitergegeben, allerdings muss davon ausgegangen werden, dass eine Fehlmessung und/oder eine Fehlberechnung für den ermittelten Ort vorliegt, so dass eine Überprüfung des ermittelten Orts vorgenommen werden muss. Diese Überprüfung wird exemplarisch in Echtzeit, also beispielsweise mit einer Taktfrequenz von 1000Hz, in der Auswerteeinrichtung 10 vorgenommen. Allerdings erfolgt die Überprüfung anhand des zweiten Positionssignals des zweiten Wegmesssystems 13, das mit einer langsameren Taktfrequenz, exemplarisch mit einer Taktfrequenz von 100hz arbeitet. Dementsprechend liegt in ungünstigsten Fall für die Überprüfung des Orts, an dem die Maschinensteuerung 11 das Prüfsignal ausgegeben hat, ein zweites Positionssignal vor, das bereits veraltet ist.

Exemplarisch müsste im ungünstigsten Fall ein erstes Positionssignal, dessen Positionswert 2ms vorher ermittelt wurde mit einem zweiten Positionssignal verglichen werden, dessen Positionswert 10ms vorher ermittelt wurde und der somit nicht mehr als Echtzeitmesswert angesehen werden kann. Um diesen zeitlichen Versatz zwischen den beiden Positionssignalen zu berücksichtigen, ist in der Auswerteeinrichtung 10 ein Berechnungsalgorithmus hinterlegt, der mit einem vorgebbaren Toleranzbereich arbeitet.

Exemplarisch kann vorgesehen sein, dass ein von der Maschinensteuerung 11 ermittelter Ort zur Abgabe des Prüfsignals von der Überwachungseinrichtung 7 als korrekt ermittelt angesehen wird, wenn sich dieser Ort um maximal 2mm von dem Ort unterscheidet, der vom zweiten Wegmesssystem 13 an die Verarbeitungseinrichtung 10 ausgegeben wurde, nachdem das Prüfsignal an der Verarbeitungseinrichtung 10 eingetroffen war. Der exemplarische Toleranzbereich von 2mm basiert auf folgenden Annahmen: eine maximale Geschwindigkeit für den Werkzeugträger 4 beträgt 200mm/s, eine maximale Zeitverzögerung für eine Bereitstellung des zweiten Positionssignals nach Eintreffen des Prüfsignals an der Verarbeitungseinrichtung 10 beträgt 10ms, so dass sich ein maximaler Ortsversatz von 2mm einstellt. Bei Vorliegen einer anderen maximalen Geschwindigkeit für den Werkzeugträger 4 oder anderen Taktfrequenzen für das erste und/oder zweite Wegmesssystem 12, 13 kann ein anderer Toleranzbereich vorgegeben werden.

Sofern die Überwachungseinrichtung 7 anhand der vorstehenden Ortsbestimmung eine korrekte Funktion der Maschinensteuerung 11 der Gesenkbiegemaschine 1 festgestellt hat, können beispielsweise die in einer gemeinsamen ersten Ebene 34 angeordneten Strahlungsdetektoren 28 und 32 sowie der Strahlungsdetektor 31 ausgeblendet werden. Ferner kann vorgesehen werden, ein Zeitglied für die Ausblendung des in einer zweiten Ebene 35 angeordneten Strahlungsdetektors 29 zu starten, wobei die Zeit bis zur Ausblendung so bemessen ist, dass keine Unterbrechung des Detektionsstrahls 14 auf diesen Strahlungsdetektor 31 durch das Werkstück zu erwarten ist. Bei Unterschreiten einer vorgebbaren Bewegungsgeschwindigkeit, die auch als "Schleichgang" bezeichnet wird, kann nunmehr auch der letzte Strahlungsdetektor 30 ausgeblendet werden. Ab diesem Zeitpunkt ist davon auszugehen, dass der Spalt zwischen Stempel 5 und Werkstück vollständig geschlossen ist und somit keine unmittelbare Quetschgefahr mehr besteht. Ferner wird bei der zweiten, langsamen Bearbeitungsgeschwindigkeit davon ausgegangen, dass hierbei ohnehin nur ein geringes Gefahrenpotential vom der Gesenkbiegemaschine 1 ausgeht.

## Patentansprüche

1. Umformeinrichtung mit einem Maschinenbett (2), einem relativbeweglich am Maschinenbett (2) aufgenommenen Werkzeugträger (4) zur Aufnahme eines Werkzeugs (5), einer mit dem Werkzeugträger (4) gekoppelten Antriebseinrichtung (16), einer Maschinensteuerung (11) zur Ansteuerung der Antriebseinrichtung (16) und einer Überwachungseinrichtung (7), die zur Überwachung von Bewegungen des Werkzeugträgers (4) und zur Bereitstellung eines Abschaltsignals an eine der Antriebseinrichtung (16) vorgeschaltete Trenneinrichtung (17) bei Auftreten eines vorgebbaren Überwachungsfalls ausgebildet ist, wobei die Überwachungseinrichtung (7) wenigstens eine Strahlungsquelle (8) und mehrere der Strahlungsquelle (8) gegenüberliegend angeordnete Strahlungsdetektoren (28 bis 32; 128 bis 132) umfasst und wobei zumindest ein Teil der von der Strahlungsquelle (8) ausgehenden Strahlenbündel (14) längs einer Arbeitskante (36) des Werkzeugs (5) ausgerichtet ist, sowie mit einem ersten Wegmesssystem (12) und mit einem zweiten Wegmesssystem (13), die jeweils zur Ausgabe von Positionssignalen für eine Positionsermittlung des Werkzeugträgers (4 gegenüber dem Maschinenbett (2) ausgebildet sind, wobei die Maschinensteuerung (11) für eine Ansteuerung der Antriebseinrichtung (16) mit dem ersten Wegmesssystem (12) verbunden ist, **dadurch gekennzeichnet, dass** das erste Wegmesssystem (12) für eine zyklische Bereitstellung von ersten Positionssignalen in einem ersten, schnellen Arbeitstakt ausgebildet ist und dass das zweite Wegmesssystem (13) für eine zyklische Bereitstellung von zweiten Positionssignalen in einem zweiten, langsamen Arbeitstakt ausgebildet ist, wobei die Überwachungseinrichtung (7) derart für einen Vergleich der ersten und zweiten Positionssignale ausgebildet, dass bei Vorliegen eines Positionssignals des ersten Wegmesssystems (12), das ein Erreichen einer vorgebbaren Position des Werkzeugträgers (4) gegenüber dem Maschinenbett (2) anzeigt, ein Vergleich mit dem zweiten Positionssignal erfolgt und dass eine Deaktivierung wenigstens eines Strahlungsdetektors (28 bis 32; 128 bis 132) erfolgt, wenn bei dem Vergleich eine Differenz zwischen dem ersten und dem zweiten Positionssignal unterschritten ist, um eine Schließbewegung des Werkzeugträgers (4) gegenüber dem Maschinenbett (2) fortsetzen zu können.

2. Umformeinrichtung nach Anspruch 1, **dadurch gekennzeichnet, dass** das erste Wegmesssystem (12) oder das erste Wegmesssystem (12) und die Maschinensteuerung (11) gemäß einer ersten Sicherheitskategorie eines Sicherheitsstandards ausgebildet ist oder sind und dass die Überwachungseinrichtung (7) und die Trenneinrichtung (17) zusammen mit dem zweiten Wegmesssystem (13) ein sicheres Arbeitssystem bilden, das gemäß einer zweiten Sicherheitskategorie des Sicherheitsstandards ausgebildet ist, wobei die zweite Sicherheitskategorie auf einem höheren Niveau als die erste Sicherheitskategorie innerhalb des Sicherheitsstandards angesiedelt ist.

3. Umformeinrichtung nach Anspruch 1 oder 2, **dadurch gekennzeichnet, dass** die Überwachungseinrichtung (7) derart für einen Vergleich der ersten und zweiten Positionssignale ausgebildet, dass eine Bereitstellung des Abschaltsignals an die Trenneinrichtung (17) erfolgt, wenn bei dem Vergleich eine Differenz zwischen dem ersten und dem zweiten Positionssignal überschritten ist.

4. Umformeinrichtung nach Anspruch 1, 2 oder 3, **dadurch gekennzeichnet, dass** das zweite Wegmesssystem (13) für eine Ermittlung des zweiten Positionssignals auf der Basis von wenigstens zwei voneinander unabhängigen internen Wegsignalen oder auf der Basis eines internen Wegsignals und eines externen Wegsignals, insbesondere des ersten Positionssignals, ausgebildet ist.

5. Umformeinrichtung nach Anspruch 1, 2, 3 oder 4, **dadurch gekennzeichnet, dass** ein erster Strahlungsdetektor (28; 128) längs einer Schließbewegungsrichtung (33) des Werkzeugträgers (4) mit einem Abstand von der Arbeitskante (36) des Werkzeugs (5) entfernt angeordnet ist, der zumindest einem Nachlaufweg des Werkzeugträgers (4) bei Abschaltung der Antriebseinrichtung (16) aus einer ersten Bewegungsgeschwindigkeit, insbesondere einem Schnellgang, entspricht.

6. Verfahren zum Betreiben einer Umformeinrichtung (1), die nach einem der vorhergehenden Ansprüche ausgebildet ist, **gekennzeichnet durch** die Schritte: Durchführen einer Annäherungsbewegung des Werkzeugträgers (4) gegenüber dem Maschinenbett (2) mit einer ersten Bewegungsgeschwindigkeit, Überwachung einer Strahlungsbeaufschlagung von mehreren Strahlungsdetektoren (28 bis 32; 128 bis 132) mittels der Überwachungseinrichtung (7), Ermitteln einer Position des Werkzeugträgers (4) längs der Schließbewegungsrichtung (33) **durch** die Maschinensteuerung (11) anhand von Positionssignalen des ersten Wegmesssystems (12) und Bereitstellen eines Prüfsignals von der Maschinensteuerung (11) an die Überwachungseinrichtung (7) bei Erreichen einer vorgebbaren, von der Maschinensteuerung (11) ermittelten Relativposition, Vergleichen des ersten Positionssignals mit dem zweiten Positionssignal in der Überwachungseinrichtung (7) und Deaktivierung wenigstens eines Strahlungsdetektors (28 bis 32; 128 bis 132), wenn bei dem Vergleich eine Differenz zwischen dem ersten und dem zweiten Positionssignal unterschritten ist, so dass eine Schließbewegung des Werkzeugträgers (4) gegenüber dem Maschinenbett (2) fortgesetzt werden kann

7. Verfahren zum Betreiben einer Umformeinrichtung (1) nach Anspruch 6, **dadurch gekennzeichnet, dass** nach Bereitstellung des Prüfsignals von der Maschinensteuerung (11) an die Überwachungseinrichtung (7) eine Abbremsung der Antriebseinrichtung (16) auf eine zweite, geringere Bewegungsgeschwindigkeit erfolgt, wenn bei dem Vergleich der Positionssignale die Differenz zwischen dem ersten und dem zweiten Positionssignal unterschritten ist und dass mit dem Beginn der Abbremsung auf die zweite Bewegungsgeschwindigkeit eine Deaktivierung derjenigen Strahlungsdetektoren (32; 132) vorgenommen wird, die in einer gemeinsamen, quer zur Schließbewegungsrichtung (33) ausgerichteten ersten Ebene (34) mit dem ersten Strahlungsdetektor (28; 128) angeordnet sind.

8. Verfahren zum Betreiben einer Umformeinrichtung (1) nach Anspruch 6 oder 7, **dadurch gekennzeichnet, dass** mit dem Beginn der Abbremsung auf die zweite Bewegungsgeschwindigkeit wenigstens ein Strahlungsdetektor (29), der in einer parallel zur ersten Ebene (34) angeordneten, zweiten Ebene (35) angeordnet ist, die einen geringeren Abstand zur Arbeitskante (36) des Werkzeugs als die erste Ebene (34) aufweist, nach Ablauf einer vorgebbaren Zeitdauer deaktiviert wird.

9. Verfahren zum Betreiben einer Umformeinrichtung (1) nach Anspruch 8, **dadurch gekennzeichnet, dass** nach der Bereitstellung des Prüfsignals keine Überwachung der jeweils deaktivierten Strahlungsdetektoren (28, 32; 128, 132) vorgenommen wird und lediglich ein Ausbleiben von Strahlen auf aktiven Strahlungsdetektoren (29, 30, 31; 129, 130 131) zur Bereitstellung des Abschaltsignals an die der Antriebseinrichtung (16) vorgeschaltete Trenneinrichtung (17) führt.

10. Verfahren zum Betreiben einer Umformeinrichtung (1) nach Anspruch 7, 8 oder 9, **dadurch gekennzeichnet, dass** bei Erreichen der zweiten Bewegungsgeschwindigkeit eine Deaktivierung sämtlicher Strahlungsdetektoren (28 bis 32; 128 bis 132) vorgenommen wird.

11. Verfahren zum Betreiben einer Umformeinrichtung (1) nach einem der Ansprüche 7 bis 10, **dadurch gekennzeichnet, dass** die Bereitstellung des Prüfsignals an der vorgebbaren Relativposition vom ersten Wegmesssystem (12) und der Maschinensteuerung (11) in einer niedrigeren Sicherheitskategorie gemäß einem vorgebbaren Sicherheitsstandard vorgenommen wird als die Überprüfung der ermittelten Relativposition anhand eines Positionssignals des zweiten Wegmesssystems (13), , das einer höheren Sicherheitskategorie als das erste Wegmesssystem (12) zugehörig ist.

## Claims

1. Forming apparatus with a machine bed (2), a tool holder (4) to hold a tool (5) and mounted movably relative to the machine bed (2), a drive unit (16) connected to the tool holder (4), a machine control (11) for operating the drive unit (16), and a monitoring device (7) designed for monitoring movements of the tool holder (4) and for provision of a shutdown signal to a disconnector (17) upstream of the drive unit (16), if a presettable monitoring event occurs, wherein the monitoring device (7) includes at least one radiation source (8) and several radiation detectors (28 to 32; 128 to 132) mounted opposite the radiation source (8), and wherein at least one portion of the beam (14) emitted from the radiation source (8) is aligned along a working edge (36) of the tool (5), together with a first distance measuring system (12) and with a second distance measuring system (13), each designed to emit position signals to determine a position of the tool holder (4) relative to the machine bed (2), wherein the machine control (11) is connected to the first distance measuring system (12) for operation of the drive unit (16), **characterised in that** the first distance measuring system (12) is designed for cyclical provision of first position signals in a first, rapid, work cycle, and that the second distance measuring system (13) is designed for cyclical provision of second position signals in a second slow work cycle, wherein the monitoring device (7) is so designed for comparison of the first and second position signals that, in the presence of a position signal of the first distance measuring system (12) indicating a reaching of a presettable position of the tool holder (4) relative to the machine bed (2), a comparison is made with the second position signal, and that deactivation of at least one radiation detector (28 to 32; 128 to 132) takes place if, in the comparison, a difference between the first and second position signal is undershot, so that a closing movement of the tool holder (4) relative to the machine bed (2) may be continued.

2. Forming apparatus according to claim 1, **characterised in that** the first distance measuring system (12) or the first distance measuring system (12) and the machine control (11) is or are designed in accordance with a first safety category of a safety standard and that the monitoring device (7) and the disconnector (17) together with the second distance measuring system (13) form a safe operating system which is designed in accordance with a second safety category of the safety standard, wherein the second safety category is located on a higher level than the first safety category within the safety standard.

3. Forming apparatus according to claim 1 or 2, **characterised in that** the monitoring device (7) is so designed for comparison of the first and second position signals that provision of the shutdown signal to the disconnector (17) takes place if the comparison reveals that a difference between the first and second position signal is exceeded.

4. Forming apparatus according to claim 1, 2 or 3, **characterised in that** the second distance measuring system (13) is designed for determination of the second position signal on the basis of at least two internal distance signals, independent of one another, or on the basis of one internal distance signal and one external distance signal, in particular the first position signal.

5. Forming apparatus according to claim 1, 2, 3 or 4, **characterised in that** a first radiation detector (28; 128) is arranged along a direction of closing movement (33) of the tool holder (4) at a distance from the working edge (36) of the tool (5) corresponding at least to an overtravel distance of the tool holder (4) during shutdown of the drive unit (16) from a first movement speed, in particular rapid traverse.

6. Method of operating a forming apparatus (1), designed according to any of the preceding claims, **characterised by** the steps: carrying out an approach movement of the tool holder (4) to the machine bed (2) at a first movement speed, monitoring of a radiation application of several radiation detectors (28 to 32; 128 to 132) by means of the monitoring device (7), determining a position of the tool holder (4) along the direction of closing movement (33) by the machine control (11) with the aid of position signals from the first distance measuring system (12), and provision of a test signal from the machine control (11) to the monitoring device (7) on reaching a presettable relative position determined by the machine control (11), comparison of the first position signal with the second position signal in the monitoring device (7) and deactivation of at least one radiation detector (28 to 32; 128 to 132) when the comparison reveals an undershoot in the difference between the first and the second position signal, so that a closing movement of the tool holder (4) relative to the machine bed (2) may be continued.

7. Method of operating a forming apparatus (1) according to claim 6, **characterised in that**, after provision of the test signal by the machine control (11) to the monitoring device (7), braking of the drive unit (16) to a second lower movement speed is effected if the comparison of the position signals reveals that the difference between the first and second position signals is undershot, and with the start of braking to the second movement speed a deactivation is made of those radiation detectors (32; 132) which are arranged in a common first plane (34) with the first radiation detector (28; 128) aligned transversely to the direction of closing movement (33).

8. Method of operating a forming apparatus (1) according to claim 6 or 7, **characterised in that** at the start of braking to the second movement speed, at least one radiation detector (29) which is arranged in a second plane (35) parallel to the first plane (34) and at a smaller distance from the working edge (36) of the tool than the first plane (34), is deactivated after a presettable period of time has elapsed.

9. Method of operating a forming apparatus (1) according to claim 8, **characterised in that** after the provision of the test signal, no monitoring of the respectively deactivated radiation detectors (28, 32; 128, 132) takes place, and only an absence of rays on active radiation detectors (29, 30, 31; 129, 130, 131) leads to provision of the shutdown signal to the disconnector (17) upstream of the drive unit (16).

10. Method of operating a forming apparatus (1) according to claim 7, 8 or 9, **characterised in that** on reaching the second movement speed, a deactivation of all radiation detectors (28 to 32; 128 to 132) takes place.

11. Method of operating a forming apparatus (1) according to any of claims 7 to 10, **characterised in that** the provision of the test signal at the presettable relative position of the first distance measuring system (12) and the machine control (11) is made in a lower safety category according to a presettable safety standard than the checking of the determined relative position with the aid of a position signal of the second distance measuring system (13), which belongs to a higher safety category than the first distance measuring system (12).

## Revendications

1. Dispositif de mise en forme comprenant un banc de machine (2), un porte-outil (4) logé de manière relativement mobile au niveau du banc de machine (2), pour recevoir un outil (5), un dispositif d'entraînement (16) couplé au porte-outil (4), une commande de machine (11) pour commander le dispositif d'entraînement (16) et un dispositif de surveillance (7), qui est réalisé afin de surveiller des déplacements du porte-outil (4) et pour fournir un signal de mise hors service à un dispositif de coupure (17) monté en amont de l'unité d'entraînement (16) lors de l'apparition d'un cas de surveillance pouvant être prédéfini, dans lequel le dispositif de surveillance (7) comprend au moins une source de rayonnement (8) et plusieurs détecteurs de rayonnement (28 à 32 ; 128 à 132) disposés de manière à faire face à la source de rayonnement (8) et dans lequel au moins une partie des faisceaux de rayons (14) partant de la source de rayonnement (8) est orientée le long d'une arête de travail (36) de l'outil (5), et comprenant un premier système de mesure de course (12) et un deuxième système de mesure de course (13), qui sont réalisés respectivement afin d'émettre des signaux de position pour une détermination de position du porte-outil (4) par rapport au banc de machine (2), dans lequel la commande de machine (11) est reliée au premier système de mesure de course (12) pour une commande du dispositif d'entraînement (16), **caractérisé en ce que** le premier système de mesure de course (12) est réalisé en vue de fournir de manière cyclique des premiers signaux de position selon une première cadence de travail rapide, et **en ce que** le deuxième système de mesure de course (13) est réalisé en vue de fournir de manière cyclique des deuxièmes signaux de position selon une deuxième cadence de travail lente, dans lequel le dispositif de surveillance (7) est réalisé en vue d'une comparaison des premiers et des deuxièmes signaux de position de telle manière qu'en présence d'un signal de position du premier système de mesure de course (12), lequel indique qu'une position prédéfinie du porte-outil (4) par rapport au banc de machine (2) a été atteinte, une comparaison au deuxième signal de position est effectuée, et **en ce qu'**une désactivation au moins d'un détecteur de rayonnement (28 à 32; 128 à 132) est effectuée lorsque lors de la comparaison une différence entre le premier et le deuxième signal de position n'est pas atteinte afin de pouvoir poursuivre un déplacement de fermeture du porte-outil (4) par rapport au banc de machine (2).

2. Dispositif de mise en forme selon la revendication 1, **caractérisé en ce que** le premier système de mesure de course (12) ou le premier système de mesure de course (12) et la commande de machine (11) est ou sont réalisés selon une première catégorie de sécurité d'une norme de sécurité, ou **en ce que** le dispositif de surveillance (7) et le dispositif de coupure (17) forment conjointement avec le deuxième système de mesure de course (13) un système de travail fiable, qui est réalisé selon une deuxième catégorie de sécurité de la norme de sécurité, dans lequel la deuxième catégorie de sécurité est établie sur un niveau plus élevé que la première catégorie de sécurité au sein de la norme de sécurité.

3. Dispositif de mise en forme selon la revendication 1 ou 2, **caractérisé en ce que** le dispositif de surveillance (7) est réalisé en vue de comparer les premiers et deuxièmes signaux de position de telle manière qu'un signal de mise hors service est fourni au dispositif de coupure (17) quand lors de la comparaison une différence entre le premier et le deuxième signal de position est dépassée.

4. Dispositif de mise en forme selon la revendication 1, 2 ou 3, **caractérisé en ce que** le deuxième système de mesure de course (13) est réalisé en vue de déterminer le deuxième signal de position sur la base d'au moins deux signaux de course internes indépendants l'un de l'autre ou sur la base d'un signal de course interne et d'un signal de course externe, en particulier du premier signal de position.

5. Dispositif de mise en forme selon la revendication 1, 2, 3 ou 4, **caractérisé en ce qu'**un premier détecteur de rayonnement (28; 128) est disposé de manière éloignée à une distance de l'arête de travail (36) de l'outil (5) le long d'une direction de déplacement de fermeture (33) du porte-outil (4), laquelle distance correspond au moins à une course de ralentissement du porte-outil (4) lors de la mise hors service du dispositif d'entraînement (16) depuis une première vitesse de déplacement, en particulier une vitesse rapide.

6. Procédé pour faire fonctionner un dispositif de mise en forme (1), qui est réalisé selon l'une quelconque des revendications précédentes, **caractérisé par** les étapes suivantes consistant à : exécuter un déplacement de rapprochement du porte-outil (4) par rapport au banc de machine (2) à une première vitesse de déplacement ; surveiller une exposition au rayonnement de plusieurs détecteurs de rayonnement (28 à 32; 128 à 132) au moyen du dispositif de surveillance (7), déterminer une position du porte-outil (4) le long de la direction de déplacement de fermeture (33) par la commande de machine (11) à l'aide des signaux de position du premier système de mesure de course (12) et fournir un signal de contrôle de la commande de machine (11) au dispositif de surveillance (7) lorsqu'une position relative prédéfinie, déterminée par la commande de machine (11) est atteinte, comparer le premier signal de position au deuxième signal de position dans le dispositif de surveillance (7) et désactiver au moins un détecteur de rayonnement (28 à 32 ; 128 à 132) quand lors de la comparaison la valeur d'une différence entre le premier et le deuxième signal de position n'est pas atteinte de sorte qu'un déplacement de fermeture du porte-outil (4) par rapport au banc de machine (2) peut être poursuivi.

7. Procédé pour faire fonctionner un dispositif de mise en forme (1) selon la revendication 6, **caractérisé en ce qu'**un ralentissement du dispositif d'entraînement (16) à une deuxième vitesse de déplacement plus faible est effectué après que le signal de contrôle a été fourni par la commande de machine (11) au dispositif de surveillance (7) quand lors de la comparaison des signaux de position, la valeur de la différence entre le premier et le deuxième signal de position n'est pas atteinte, et **en ce qu'**est entreprise, avec le début du ralentissement à la deuxième vitesse de déplacement, une désactivation desdits détecteurs de rayonnement (32 ; 132), qui précisément sont disposés dans un premier plan (34) commun orienté de manière transversale par rapport à la direction de déplacement de fermeture (33), comprenant le premier détecteur de rayonnement (28 ; 128).

8. Procédé pour faire fonctionner un dispositif de mise en forme (1) selon la revendication 6 ou 7, **caractérisé en ce qu'**au moins un détecteur de rayonnement (29), qui est disposé dans un deuxième plan (35) disposé de manière parallèle par rapport au premier plan (34), lequel présente par rapport à l'arête de travail (36) de l'outil une distance inférieure par rapport au premier niveau (34), est désactivé une fois la durée prédéfinie expirée avec le début du ralentissement à la deuxième vitesse de déplacement.

9. Procédé pour faire fonctionner un dispositif de mise en forme (1) selon la revendication 8, **caractérisé en ce qu'**aucune surveillance des détecteurs de rayonnement (28, 32; 128, 132) désactivés n'est entreprise après que le signal de contrôle a été fourni, et **en ce que** seule une absence de rayons sur des détecteurs de rayonnement (29, 30, 31 ; 129, 130, 131) actifs donne lieu à la fourniture du signal de mise à l'arrêt au dispositif de coupure (17) installé en amont du dispositif d'entraînement (16).

10. Procédé pour faire fonctionner un dispositif de mise en forme (1) selon la revendication 7, 8 ou 9, **caractérisé en ce qu'**une désactivation de tous les détecteurs de rayonnement (28 à 32 ; 128 à 132) est entreprise lorsque la deuxième vitesse de déplacement est atteinte.

11. Procédé pour faire fonctionner un dispositif de mise en forme (1) selon l'une quelconque des revendications 7 à 10, **caractérisé en ce que** la fourniture du signal de contrôle à la position relative pouvant être prédéfinie du premier système de mesure de course (12) et de la commande de machine (11) est entreprise dans une catégorie de sécurité plus basse selon une norme de sécurité pouvant être prédéfinie que la surveillance de la position relative déterminée à l'aide d'un signal de position du deuxième système de mesure de course (13), qui relève d'une catégorie de sécurité plus élevée que le premier système de mesure de course (12).
